# EUROPÄISCHE PATENTSCHRIFT

(11) **EP 2 923 544 B1**
(45) Veröffentlichungstag und Bekanntmachung des Hinweises auf die Patenterteilung: **19.10.2016**
(21) Anmeldenummer: 15401024.3
(22) Anmeldetag: 17.03.2015
(51) Int. Cl.: A01C 7/04

(54) **PNEUMATISCHE EINZELKORNSÄMASCHINE**
PNEUMATIC SINGLE GRAIN SOWING MACHINE
SEMOIR MONOGRAINE PNEUMATIQUE

(30) Priorität: 26.03.2014 DE 102014104154
(43) Veröffentlichungstag der Anmeldung: 30.09.2015
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Mertens, Daniel, 26121 Oldenburg (DE); Wien, Thomas, 28816 Stuhr (DE)

(56) Entgegenhaltungen:
- EP-A1- 2 702 849
- WO-A1-2011/056138
- WO-A2-03/055291
- DE-A1- 2 242 272
- US-A- 4 449 642
- US-A1- 2009 000 533

## Beschreibung

Die Erfindung betrifft eine pneumatische Einzelkornsämaschine gemäß des Oberbegriffes des Patentanspruches 1.

Eine derartige pneumatische Einzelkornsämaschine ist in DE 22 42 272 B1 beschrieben. Diese Einzelkornsämaschine weist eine rotierend angetriebene Vereinzelungseinrichtung auf. Diese Vereinzelungseinrichtung ist als eine zwei beanstandet zueinander angeordnete Seitenwände aufweisende geschlossene schmale Hohltrommel ausgebildet. Über eine in dem inneren mittleren Bereich der einen Seitenwand angeordneten Lagerung ist die Hohltrommel an dem Gehäuse drehbar gelagert. Weiterhin ist im Bereich der Lagerung der Hohltrommel eine nur einen geringen Durchmesser, etwa entsprechend der Größe der Lagerung aufweisendes umlaufendes Dichtungselement zwischen der Aussparung in der Seitenwand und dem Gehäuse zugeordneten Achsenelement angeordnet. Hierdurch ergeben sich nur sehr geringe Reibungs- und Widerstandskräfte bei der Drehung der Hohltrommel auf dem Achsenelement. Somit sind nur sehr geringe Antriebskräfte für den rotierenden Antrieb der Hohltrommel erforderlich. Bei dieser bekannten Vereinzelungseinrichtung wird der Innenraum der Hohltrommel mit einem Unterdruck beaufschlagt, so dass eine Druckdifferenz an den in zumindest einer der Seitenwände angeordneten Perforationen entsteht. Durch diese Druckdifferenz an den Perforationen lagern sich Samenkörner, wenn die Vereinzelungstrommel mit den Perforationen durch den Saatgutvorrat geführt wird, an. An einer vorbestimmten Stelle, an der die Abdeckeinrichtung angeordnet ist, wird die Druckdifferenz an den Perforationen unterbrochen, so dass die Samenkörner sich von der Vereinzelungseinrichtung lösen und in eine zugeordnete Saatleitung fallen und von hier aus zu einer, beispielsweise als Säschar ausgebildeten Ablageeinrichtung geleitet werden.

Bei dieser bekannten Einzelkornsämaschine erfolgt die Saatgutförderung allein aufgrund der Schwerkraft. Somit müssen die Saatleitungen für eine störungsfreie und gute Saatgutführung relativ steil nach unten fallend ausgebildet und angeordnet sein. Hierdurch ist die Anordnung und freie Ausgestaltung der Saatgutführung stark eingeschränkt. Falls ungünstige Bauverhältnisse und somit daraus resultierenden schlechte Anordnungen der Saatgutführung vorliegen, müssen zusätzliche Bauteile und Förderleitungen eingesetzt werden, um eine Förderunterstützung für die vereinzelten Samenkörner, beispielsweise durch Druckluft bis zu der Ablageeinrichtung zu realisieren.

Eine weitere Einzelkornsämaschine ist durch die EP 0 598 636 B1 bekannt. Diese Einzelkornsämaschine weist ebenfalls eine Vereinzelungseinrichtung auf. Diese Vereinzelungseinrichtung ist wiederum als eine Art Hohltrommel ausgebildet, in deren Zylindermantel in umlaufenden Reihen Perforationen angeordnet sind. Diese Hohltrommel ist in einem geschlossenen Gehäuse angeordnet. Die umlaufenden Enden des Zylindermantels der Hohltrommel sind gegenüber den Seitenwänden des Gehäuses abgedichtet. Aufgrund des großen Durchmessers der Hohltrommel und der sich hieraus ergebenden großen ringförmigen Berührungsfläche zwischen den Enden der Zylindertrommel und den Seitenwänden des Gehäuses ergeben sich große Widerstandskräfte aufgrund der entstehenden Reibung zwischen Zylindertrommel und Seitenwänden. Hierdurch ist ein relativ großes Antriebsmoment zum rotierenden Antrieb der Trommel erforderlich. Bei dieser Einzelkornsämaschine wird das Gehäuse, in dem sich die Hohltrommel befindet, unter einen Überdruck gegenüber dem sich im Innenraum der Trommel befindlichen Atmosphärendruck gesetzt. Hierdurch wird eine Druckdifferenz an den sich in den Zylindermantel der Hohltrommel befindlichen Perforationen erzeugt, so dass sich die Samenkörner an diesem Perforationen anlagern, wenn die Perforationen durch den Saatgutvorrat geführt werden. An einer vorbestimmten Stelle, an der die Abdeckeinrichtung angeordnet ist, wird die Druckdifferenz an den Perforationen unterbrochen, so dass die Samenkörner sich von der Vereinzelungseinrichtung lösen und so in die Öffnung der zugeordneten Saatleitung gelangen. Aufgrund des in dem Gehäuse herrschenden Luftüberdruckes werden von den Perforationen lösenden Samenkörner durch den herrschenden Überdruck in dem Gehäuse und der daraus resultierenden Luftströmung in die Saatleitungen von der Luftströmung mitgerissen und zu den beispielsweise als Säschare ausgebildeten Ablageeinrichtungen gefördert.

Durch die EP 2 702 849 A1 ist weitere Einzelkornsämaschine bekannt. Bei dieser Einzelkornsämaschine kann die Druckbeaufschlagungseinrichtung für die Förderung der vereinzelten Saatkörner über eine Schalteinrichtung zur wahlweisen Förderung der dosierten Saatkörner mittels Druckluft oder ohne Druckluft mittels Schwerkraft in der jeweiligen Saatleitung zu- und/oder abgeschaltet werden. Hierdurch ist die Sämaschine auch bei schwierigen Einsatzverhältnissen universell einsetzbar.

Bei Einzelkornsämaschinen mit einer Druckluftförderung der Saatkörner von der Vereinzelungseinrichtung zu den Saatgutablageeinrichtungen sind den Saatgutablageeinrichtungen sogenannte Fangrollen zugeordnet. Durch die Fangrollen wird das mittels Druckluft geförderte Saatgut aufgefangen, abgebremst und in den Boden eingebettet. Diese Verfahrensweise hat sich bewährt. Jedoch bei nassen Verhältnisse haftet an den Fangrollen Boden an, so dass kein ordnungsgemäßes Arbeiten der Fangrollen und einbetten des Saatgutes in den Boden gewährleistet ist.

Der Erfindung liegt die Aufgabe zu Grunde, die erfindungsgemäße Einzelkornsämaschine mit einfachen Maßnahmen universal für verschiedenste Einsatzbedingungen einsetzbar zu machen.

Diese Aufgabe wird erfindungsgemäß dadurch gelöst, dass in einer Betriebsart das die als Hohltrommel ausgebildete Vereinzelungseinrichtung umschließende Gehäuse geschlossen ausgebildet und über das Gebläse mit einem Überdruck gegenüber dem im Innenraum der Hohltrommel herrschenden niedrigeren Druck, vorzugsweise Atmosphärendruck beaufschlagbar ist, und dass in der anderen Betriebsart der Innenraum der Hohltrommel gegenüber dem auf der Außenseite der Hohltrommel herrschenden Atmosphärendruck mit einem Unterdruck beaufschlagbar ist.

Infolge dieser Maßnahmen kann die erfindungsgemäße Einzelkornsämaschine sehr einfach von der einen auf die andere Betriebsart umgestellt werden.

Wie bereits zuvor erwähnt, kann es bei einer Aussaat unter nassen Bedingungen vorkommen, dass die Fangrollen sich nicht einwandfrei dreht. Hierbei baut sich Boden vor der jeweiligen Fangrolle auf. Dies führt zu Schlupf.

Weiterhin kann die Fangrolle bei nassen Böden zu Schadverdichtungen im Saatfurchengrund führen. Um unter nassen Bedingungen noch das Saatgut ausbringen zu können, wird die Fangrolle hoch geklappt oder demontiert.

Hierzu ist es jedoch dann auch erforderlich, da die durch die Saatgutleitung mittels Druckluft geförderten Körner dann nicht mehr von der Fangrollen aufgefangen werden können, dass eine andere Maßnahme getroffen werden muss, um die Saatkörner sicher in die Furche abzulegen. Hierzu wird dann in der erfindungsgemäßer Weise das Vereinzelungssystem von einem Überdrucksystem auf ein Unterdrucksystem umgestellt. Die Körner werden dann nicht mehr mittels Druckluft durch die Saatleitung gefördert und somit auch nicht mehr beschleunigt, sondern mit einer geringeren Geschwindigkeit der Säfurche zugeführt und in dieser abgelegt. Ausgehend von der eingangs beschriebenen, bekannten Einzelkornsämaschine unter Beibehaltung des geringen Antriebsmomentes für den rotierenden Antrieb der Vereinzelungstrommel wird eine verbesserte Saatgutführung von der Vereinzelungstrommel zu den Ablageeinrichtungen ohne aufwändige technische Maßnahmen bei optimalen Einsatzbedingungen geschaffen. So bleiben auch bei einer Beaufschlagung des Gehäuses und der Außenseite der Hohltrommel der Vereinzelungseinrichtung mit einem Überdruck die äußerst niedrigen erforderlichen Antriebskräfte für das rotierende Antreiben der Hohltrommel erhalten und gleichzeitig wird der Überdruck in dem Gehäuse dazu genutzt, die Saatleitung mit einer Luftströmung zur Förderung des vereinzelten Saatgutes in der Saatleitung zu nutzen. Hierdurch ergibt sich eine sehr einfache und effektive Ausgestaltung der Vereinzelungseinrichtung mit einer Luftstromförderung für das vereinzelte Saatgut. Wenn die Einsatzbedingungen das Arbeiten mit einer Fangrollen zum Auffangen der mit Druckluft geförderten Saatkörner nicht gestatten, kann in einfacher Weise auf die andere Betriebsart umgestellt werden, so dass dann ohne den Einsatz einer Fangrolle das Saatgut bei nassen Einsatzbedingungen ausgebracht werden kann.

Eine sehr einfache Antriebsanordnung zum rotierenden Antreiben der Hohltrommel lässt sich dadurch erreichen, dass an der Hohltrommel ein Zahnrad befestigt ist, dass durch die Gehäusewand des Gehäuses in abgedichteter Weise ein Antriebsmotor und/oder eine Antriebswelle in das Gehäuse hineinragt, dass an dem Antriebsmotor und/oder der Antriebswelle ein drehfest angeordnetes Antriebszahnrad angeordnet ist, dass das Antriebszahnrad mit dem an der Hohltrommel angeordneten Zahnrad in Antriebsverbindung steht.

Eine einfache Ausgestaltung der Antriebsvorrichtung lässt sich dadurch erreichen, dass der Antriebsmotor ein in seiner Drehzahl regelbarer Elektromotor ist.

Weitere Einzelheiten der Erfindung sind der Beispielsbeschreibung zu entnehmen.

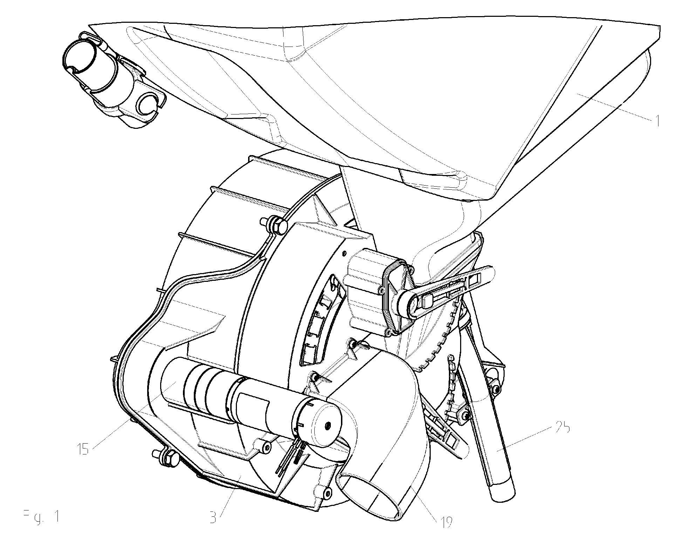

Die Zeichnungen zeigen
- Fig.1: die Vereinzelungseinrichtung der pneumatischen Einzelkornsämaschine in perspektivischer Darstellung,

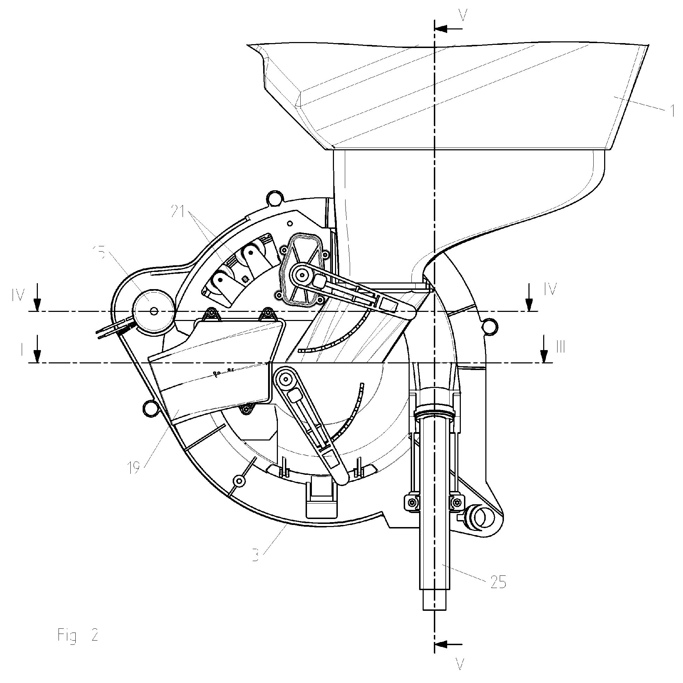

- Fig.2: die Vereinzelungseinrichtung der pneumatischen Einzelkornsämaschine in Seitenansicht,

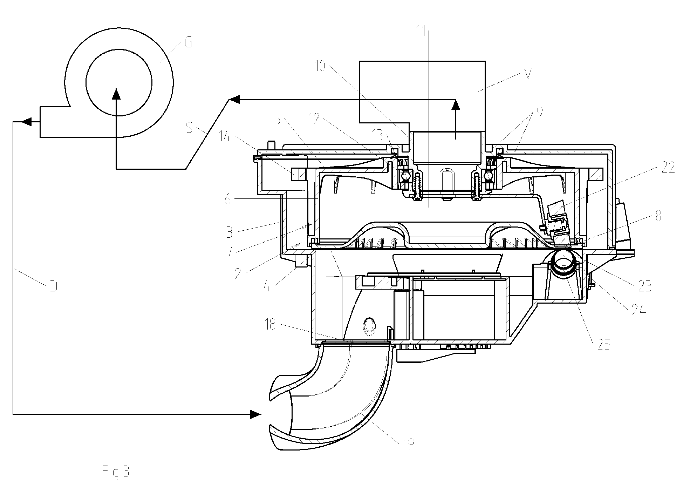

- Fig.3: die Vereinzelungseinrichtung der pneumatischen Einzelkornsämaschine im Schnitt III - III,

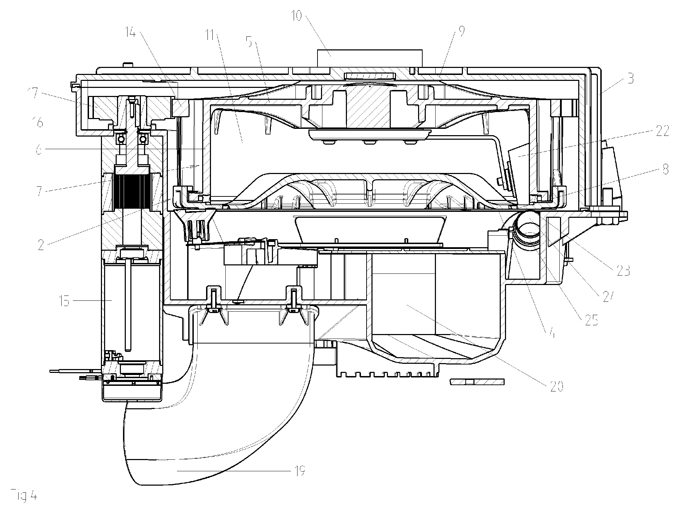

- Fig.4: die Vereinzelungseinrichtung der pneumatischen Einzelkornsämaschine im Schnitt IV - IV und

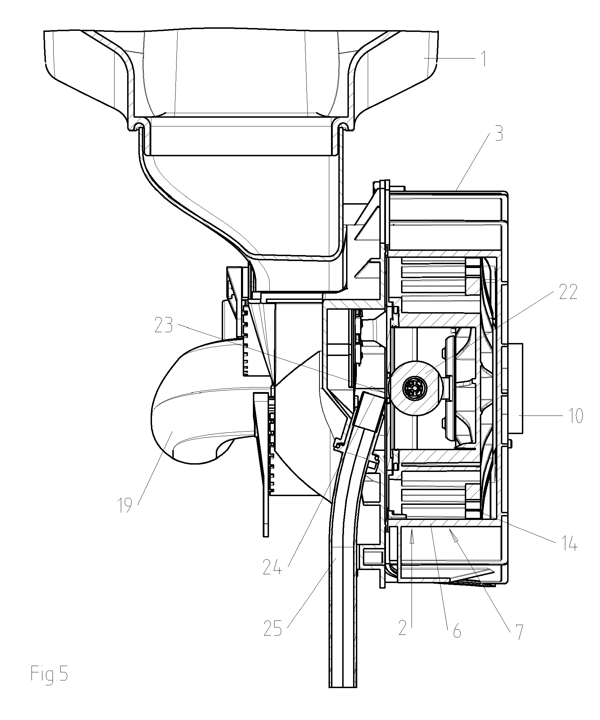

- Fig.5: die Vereinzelungseinrichtung der pneumatischen Einzelkornsämaschine im Schnitt V - V.

Die pneumatische Einzelkornsämaschine weist zumindest einen Saatgutvorratsbehälter 1 auf. Weiterhin ist diesem Saatgutvorratsbehälter zumindest eine Vereinzelungsvorrichtung 2 zugeordnet, die in einem Gehäuse 3 angeordnet ist. Diese Vereinzelungseinrichtung 2 ist drehbar angetrieben und in dem Gehäuse 3 angeordnet. Die Vereinzelungseinrichtung 2 besteht aus zwei beabstandet zueinander angeordneten Seitenwänden 4 und 5 sowie einen Zylindermantel 6 aufweisende geschlossene Hohltrommel 7. In zumindest einer dieser Seitenwände 4 sind kreisförmig angeordnete Perforationen 8 angeordnet. An der einen Gehäusewand 9 des Gehäuses 3 ist eine Hohlwelle 10 angeordnet, die bis in den Innenraum 11 der Hohltrommel 7 geführt ist. Auf dieser Hohlwelle 10 ist die Hohltrommel 7 der Vereinzelungseinrichtung 2 an dem Gehäuse 3 mittels der Lagerung 12 und der Dichtung 13 abdichtend gegenüber dem Gehäuse 3 und der Hohlwelle 10 drehbar gelagert. Somit ist die Hohltrommel 7 mittels dieser Lagerung 12 auf der Hohlwelle 10 drehbar gelagert und mittels der Dichtung 13 gegenüber der Hohlwelle 10 abgedichtet. Das die als Hohltrommel 7 ausgebildete Vereinzelungseinrichtung 2 umschließende Gehäuse 3 ist geschlossen ausgebildet.

Durch die nur eine kleine Reibungsfläche aufweisende Dichtung 13 ist die auftretende Reibung klein und die daraus resultierenden Reibungskräfte sind sehr gering. Somit ist nur eine geringe Antriebsleistung für den rotierenden Antrieb der Hohltrommel 7 der Vereinzelungseinrichtung 2 erforderlich.

An dem äußeren umlaufenden Bereich der Hohltrommel 7 ist ein Zahnrad 14 bzw. eine entsprechende Verzahnung drehfest befestigt. Durch die Gehäusewand 9 des Gehäuses 3 ist in abgedichteter Weise ein elektrischer Antriebsmotor 15 oder die Antriebswelle 16 des Antriebsmotors 15 in das Gehäuse 3 hineinragend hinein geführt. Auf der Antriebswelle 16 des Elektromotors 15 ist ein drehfest angeordnetes Antriebszahnrad 17 angeordnet. Das Antriebszahnrad 17 greift in das an der Hohltrommel 7 angeordnete Zahnrad14 und steht somit mit diesem in direkter Antriebsverbindung. Der Antriebsmotor 15 ist ein in seiner Drehzahl regelbarer Elektromotor und über nicht dargestellte Kabelverbindungen mit einer nicht dargestellten Energieversorgung und Steuer- und Regeleinrichtungen verbunden.

Oberhalb des Gehäuses 3 ist der Vorratsbehälter 1 angeordnet, der druckdicht mittels eines nicht dargestellten Deckels verschließbar ist und mit dem Gehäuse 3, in dem die Vereinzelungseinrichtung 2 angeordnet ist, entsprechend verbunden ist und so mit diesem eine geschlossene Einheit bildet. In dem Gehäuse 3, welches die Vereinzelungseinrichtung 2 umschließt, ist eine Öffnung 18 angeordnet, an welche die als Gebläse G ausgebildeten Druckerzeugungseinrichtung über den Leitungsanschluss 19 angeschlossen ist. Über eine nicht dargestellte Druckleitung wird ein Druckluftstrom D den Leitungsanschluss 19 zugeleitet. Somit ist das die als Hohltrommel 7 ausgebildete Vereinzelungseinrichtung 2 umschließende Gehäuse 3 mit einem Überdruck gegenüber dem im Innenbereich 11 der Hohltrommel 7 herrschenden niedrigeren Druck, vorzugsweise Atmosphärendruck beaufschlagbar. Dieses dadurch möglich, dass der Innenraum 11 der Hohltrommel 7 über die Hohlwelle 10, die nicht verschlossen ist, mit dem Atmosphärendruck in Verbindung steht.

Die in den Saatgutvorratsbehälter 1 befindlichen Samenkörner gelangen über die in dem Gehäuse 3 angeordnete Öffnung 20 zu der Seitenwand 4, in welcher sich die Perforationen 8 befinden, der Vereinzelungseinrichtung 2. Somit können sich an die mit einer Druckdifferenz beaufschlagten Perforationen 8, wenn diese durch den Saatgutvorrat geführt werden, die Samenkörner anlagern.

Auf der Seite, an der sich die Samenkörner an den Perforationen 8 der Seitenwand 4 anlagern, sind im oberen Bereich, im Ausführungsbeispiel als rotierende Abstreiferteller 21 ausgebildete Abstreifereinrichtungen angeordnet. Hierdurch wird sichergestellt, dass sich an jeder Perforation 8 nur ein einzelnes Saatkorn anlagert bzw. haften bleibt.

Weiterhin ist der Vereinzelungseinrichtung 2 eine die an den Perforationen 8 anliegende Druckdifferenz unterbrechende Abdeckeinrichtung 22 in Form einer drehbar angeordneten Rolle angeordnet. Mittels dieser Abdeckeinrichtung 22 wird die Druckdifferenz, die an den Perforationen 8 anliegt unterbrochen, so dass die an den Perforationen 8 anhaftenden Samenkörner sich von den Perforationen 8 der Vereinzelungseinrichtung 2 lösen. In diesen Bereich 23, an dem die Abdeckeinrichtung 22 angeordnet ist und die Samenkörner sich von den Perforationen 8 lösen, ist die Öffnung 24 einer Saatgutleitung 25 angeordnet. Aufgrund des in diesem Bereich 23 herrschenden Überdruckes gegenüber dem Atmosphärendruck werden die sich ablösenden Samenkörner von den in die Öffnung 24 der Saatgutleitung 25 hineinströmenden Luftstrom mitgerissen und durch die Saatgutleitung 25 zu den am Ende der Saatgutleitung 25 angeordneten und nicht dargestellten Saatgutablageeinrichtung, wie Säscharen und den diesen zugeordneten Fangrollen gefördert.

Wenn die Einsatzbedingungen es nicht zulassen, dass mittels nicht dargestellten Fangrollen die mittels Druckluft geförderten Samenkörner aufgefangen werden können, lässt sich die erfindungsgemäße Maschine auf eine andere Betriebsart umstellen, so dass die Samenkörner ohne Druckluftförderung und nur mittels Schwerkraft von der Vereinzelungseinrichtung 2 den Saatgutablageeinrichtungen zu gefördert werden. Hierbei ist dann einerseits die nicht dargestellte Fangrolle in eine Außerbetriebsstellung zu bringen oder ganz von den Saatgutablageeinrichtungen abzunehmen.

In dieser anderen Betriebsart ist der Innenraum der Hohltrommel gegenüber dem auf der Außenseite der Hohltrommel 7 herrschenden Atmosphärendruck mit einem Unterdruck beaufschlagbar. Hierzu wird dann einerseits der Druckluftanschluss D zwischen dem Gebläse G und dem Leitungsanschluss 19 entfernt und andererseits zwischen der Hohlwelle 10 und den Gebläse G ein Saugluftanschluss S hergestellt. Hierzu wird eine entsprechende Vorrichtung V als Anschlusselement auf die Hohlwelle 10 aufgesetzt. Die Druckdifferenz wird dann durch den niedrigeren Druck in dem Innenraum 11 der Hohltrommel 7 der Vereinzelungseinrichtung 2 und dem auf der anderen Seite der Vereinzelungseinrichtung 2 anliegenden Atmosphärendruck hergestellt. Die Funktionsweise der Vereinzelung der Samenkörner entspricht dem zuvor Beschriebenen.

Wie bereits zuvor erwähnt, kann es bei einer Aussaat unter nassen Bedingungen vorkommen, dass die nicht dargestellten Fangrollen sich nicht einwandfrei drehen. Hierbei baut sich Boden vor der jeweiligen Fangrolle auf. Dies führt zu Schlupf. Weiterhin kann die Fangrolle bei nassen Böden zu Schadverdichtungen im Saatfurchengrund führen. Um unter nassen Bedingungen noch das Saatgut ausbringen zu können, wird die Fangrolle hoch geklappt oder demontiert. Hierzu ist es jedoch dann auch erforderlich, da die durch die Saatgutleitung mittels Druckluft geförderten Körner dann nicht mehr von der Fangrollen aufgefangen werden können, dass eine andere Maßnahme getroffen werden muss, um die Saatkörner sicher in die Furche abzulegen. Hierzu wird dann das Vereinzelungssystem von einem Überdrucksystem auf ein Unterdrucksystem, wie vor beschrieben, umgestellt. Die Körner werden dann nicht mehr mittels Druckluft durch die Saatleitung 25 gefördert und somit auch nicht mehr beschleunigt, sondern mit einer geringeren Geschwindigkeit der Säfurche zugeführt und in dieser abgelegt.

Somit lässt sich die Einzelkornsämaschine sehr einfach von der einen auf die andere Betriebsart umstellen.

## Patentansprüche

1. Pneumatische Einzelkornsämaschine mit einem einen Saatgutvorratsbehälter aufweisenden Gehäuse und zumindest einer drehbar angetriebenen und in dem Gehäuse angeordneten Vereinzelungseinrichtung, die in einer kreisförmig verlaufenden Perforationsreihe Perforationen aufweist, einem Gebläse, mittels welchem eine Druckdifferenz an den Perforationen erzeugbar ist, so dass, wenn die Vereinzelungseinrichtung durch den Saatgutvorrat geführt wird, sich an den Perforationen auf der mit dem höheren Druck beaufschlagten Seite der Perforationen Samenkörner anlagern, wobei auf der mit dem niedrigeren Druck beaufschlagten Seite der Perforationen eine die an den Perforationen anliegende Druckdifferenz zum Ablösen der Samenkörner von den Perforationen unterbrechende Abdeckeinrichtung angeordnet ist, wobei im Bereich der Abdeckeinrichtung auf der der Abdeckeinrichtung abgewandten Seite der Vereinzelungseinrichtung das eine Ende einer mit ihrer Einmündungsöffnung bis an die Vereinzelungseinrichtung heranreichenden Ausbringleitung angeordnet ist, wobei die Vereinzelungseinrichtung als eine zwei beabstandet zueinander angeordnete Seitenwände aufweisende geschlossene Hohltrommel ausgebildet ist, wobei in zumindest einer dieser Seitenwände die Perforationen angeordnet sind, wobei durch zumindest eine der Seitenwände eine Hohlwelle bis in den Innenraum der Hohltrommel geführt ist, wobei die Hohltrommel mittels einer Lagerung auf der Hohlwelle gelagert und mittels einer Dichtung gegenüber der Hohlwelle abgedichtet ist, **dadurch gekennzeichnet, dass** in einer Betriebsart das die als Hohltrommel (7) ausgebildete Vereinzelungseinrichtung (2) umschließende Gehäuse (3) geschlossen ausgebildet und über das Gebläse (G) mit einem Überdruck gegenüber dem im Innenraum (11) der Hohltrommel (7) herrschenden niedrigeren Druck, vorzugsweise Atmosphärendruck beaufschlagbar ist, und dass in der anderen Betriebsart der Innenraum (11) der Hohltrommel (7) gegenüber dem auf der Außenseite der Hohltrommel (7) herrschenden Atmosphärendruck mit einem Unterdruck beaufschlagbar ist.

2. Einzelkornsämaschine nach Anspruch 1, **dadurch gekennzeichnet, dass** an der Hohltrommel (7) ein Zahnrad (14) befestigt ist, dass durch die Gehäusewand (9) des Gehäuses (3) in abgedichteter Weise ein Antriebsmotor (15) und/oder eine Antriebswelle (16) in das Gehäuse (3) hineinragt, dass an dem Antriebsmotor (3) und/oder der Antriebswelle (16) ein drehfest angeordnetes Antriebszahnrad (17) angeordnet ist, dass das Antriebszahnrad (17) mit dem an der Hohltrommel (7) angeordneten Zahnrad (14) in Antriebsverbindung steht.

3. Einzelkornsämaschine nach Anspruch 1, **dadurch gekennzeichnet, dass** der Antriebsmotor (15) ein in seiner Drehzahl regelbarer Elektromotor ist.

## Claims

1. Pneumatic single grain sowing machine with a housing having a seed storage container and with at least one singulating device which is driven rotatably and is arranged in the housing and has perforations in a row of perforations running in a circular manner, and with a fan by means of which a pressure differential can be produced at the perforations such that, when the singulating device is guided through the seed store, seed grains accumulate on the perforations, on that side of the perforations which is subjected to the higher pressure, wherein a covering device which interrupts the pressure differential prevailing at the perforations in order to detach the seed grains from the perforations is arranged on that side of the perforations which is subjected to the lower pressure, wherein the one end of a discharge line reaching with its mouth opening as far as the singulating device is arranged in the region of the covering device, on that side of the singulating device which faces away from the covering device, wherein the singulating device is designed as a closed hollow drum having two side walls arranged at a distance from each other, wherein the perforations are arranged in at least one of said side walls, wherein a hollow shaft is guided through at least one of the side walls into the interior of the hollow drum, wherein the hollow drum is mounted on the hollow shaft by means of a bearing and sealed off from the hollow shaft by means of a seal, **characterized in that**, in one operating mode, the housing (3) surrounding the singulating device (2) designed as a hollow drum (7) is of closed design and can be subjected via the fan (G) to a positive pressure in relation to the lower pressure, preferably atmospheric pressure, prevailing in the interior (11) of the hollow drum (7), and **in that**, in the other operating mode, the interior space (11) of the hollow drum (7) can be subjected to a negative pressure in relation to the atmospheric pressure prevailing on the outer side of the hollow drum (7).

2. Single grain sowing machine according to Claim 1, **characterized in that** a gearwheel (14) is fastened to the hollow drum (7), **in that** a drive motor (15) and/or a driveshaft (16) projects through the housing wall (9) of the housing (3) into the housing (3) in a sealed manner, **in that** a drive gearwheel (17) arranged non-rotatably is arranged on the drive motor (3) and/or the driveshaft (16), and **in that** the drive gearwheel (17) is in driving connection with the gearwheel (14) arranged on the hollow drum (7).

3. Single grain sowing machine according to Claim 1, **characterized in that** the drive motor (15) is a speed-adjustable electric motor.

## Revendications

1. Semoir monograine pneumatique comprenant un boîtier présentant un réservoir de semences et au moins un dispositif de séparation disposé dans le boîtier et entraîné en rotation, lequel présente des perforations en une rangée de perforations s'étendant sous forme circulaire, une soufflante au moyen de laquelle une différence de pression peut être générée au niveau des perforations de telle sorte que lorsque le dispositif de séparation est guidé à travers la réserve de semences, des graines de semences s'accumulent au niveau des perforations du côté des perforations sollicité par la pression plus élevée, un dispositif de recouvrement interrompant la différence de pression s'exerçant sur les perforations pour décoller les graines de semences des perforations étant disposé du côté des perforations sollicité par la pression plus basse, l'une des extrémités d'un conduite d'évacuation se rapprochant avec son ouverture d'embouchure jusqu'au dispositif de séparation étant disposée dans la région du dispositif de recouvrement du côté du dispositif de séparation opposé au dispositif de recouvrement, le dispositif de séparation étant réalisé sous forme d'un tambour creux fermé présentant deux parois latérales disposées à distance l'une de l'autre, les perforations étant disposées dans au moins l'une de ces parois latérales, un arbre creux étant guidé à travers au moins l'une des parois latérales jusque dans l'espace interne du tambour creux, le tambour creux étant supporté sur l'arbre creux au moyen d'un palier et étant étanchéifié par rapport à l'arbre creux au moyen d'un joint d'étanchéité, **caractérisé en ce que** dans un mode de fonctionnement, le boîtier (3) entourant le dispositif de séparation (2) réalisé en tant que tambour creux (7) est réalisé sous forme fermée et peut être sollicité par le biais de la soufflante (G) avec une surpression par rapport à la pression plus basse régnant dans l'espace intérieur (11) du tambour creux (7), de préférence la pression atmosphérique, et **en ce que** dans l'autre mode de fonctionnement, l'espace intérieur (11) du tambour creux (7) peut être sollicité avec une dépression par rapport à la pression atmosphérique régnant du côté extérieur du tambour creux (7).

2. Semoir monograine selon la revendication 1, **caractérisé en ce qu'**une roue dentée (14) est fixée au tambour creux (7), **en ce qu'**un moteur d'entraînement (15) et/ou un arbre d'entraînement (16) pénètre dans le boîtier (3) à travers la paroi de boîtier (9) du boîtier (3) de manière étanchéifiée, **en ce qu'**une roue dentée d'entraînement (17) disposée de manière solidaire en rotation est disposée sur le moteur d'entraînement (3) et/ou l'arbre d'entraînement (16) et **en ce que** la roue dentée d'entraînement (17) est en liaison d'entraînement avec la roue dentée (14) disposée sur le tambour creux (7).

3. Semoir monograine selon la revendication 1, **caractérisé en ce que** le moteur d'entraînement (15) est un moteur électrique dont la vitesse de rotation peut être réglée.
